# EUROPÄISCHE PATENTANMELDUNG

(11) **EP 0 987 476 A2**
(43) Veröffentlichungstag der Anmeldung: **22.03.2000**
(21) Anmeldenummer: 99118276.7
(22) Anmeldetag: 15.09.1999
(51) Int. Cl.: F16K 1/44

(54) **Ventil, insbesondere Doppelsitzventil**

(30) Priorität: 18.09.1998 DE 19842922
(71) Anmelder: Gebr. Rieger GmbH & Co. KG, 73431 Aalen (DE)
(72) Erfinder: Luong, Du Tai, 73431 Aalen (DE); Scheible, Werner, 73430 Aalen (DE)
(74) Vertreter: Patentanwälte Ruff, Beier, Schöndorf und Mütschele

(57) **Zusammenfassung**

Es wird ein insbesondere zur Steuerung von getrennt zu haltenden Flüssigkeiten im Chemie- und Nahrungsmittelbereich einsetzbares Doppelsitzventil beschrieben, das ein Ventilgehäuse (2) hat, das einen ersten und einen zweiten Gehäuseraum bildet. Es sind zwei in Reihe zueinander angeordnete, relativ zueinander und zum Ventilgehäuse axial bewegbare Ventilkörper (10, 11) vorgesehen, die zwischen sich einen zur Umgebung des Ventils geöffneten Leckagehohlraum (12) begrenzen. Jeder der Ventilkörper hat mindestens eine zu einer gehäusefesten Ventilsitzfläche (5) geöffnete Dichtungsnut (15, 16), in der eine Dichtung (13, 14) angeordnet ist. Erfindungsgemäß sind die Dichtungsnuten (15, 16) durch den jeweils zugeordneten Ventilkörper (10, 11) hindurch mit dem Leckagehohlraum (12) fluidleitend verbunden. Das Ventil genügt höchsten hygienischen Ansprüchen, zeigt geringe bis keine Neigung zur Ablagerung von Verunreinigungen im Dichtungsbereich und läßt sich schnell und wirkungsvoll reinigen.

## Beschreibung

Die Erfindung betrifft ein Ventil mit einen Ventilgehäuse und mindestens einem mit einer Ventilsitzfläche zusammenwirkenden, beweglichen Ventilkörper, der mindestens eine zu der Ventilsitzfläche geöffnete Dichtungsnut aufweist, in der ein Dichtungskörper zur Abdichtung des Ventilkörpers gegen die Ventilsitzfläche angeordnet oder anordenbar ist.

Bei Ventilen dieser Art kann es sich insbesondere um Einsitz- oder Doppelsitz-Aseptikventile handeln, wie sie zur Steuerung von fließfähigen Produkten in Chemie- und Nahrungsmittelbereich eingesetzt werden. Sie können als Ringleitungsventile, Bodensitzventile, Eckventile oder dergleichen ausgebildet sein und haben in der Regel axial bewegliche Ventilkörper.

Doppelsitzventile werden insbesondere zur Steuerung von getrennt zu haltenden, fließfähigen Produkten in den Bereichen Brauerei, Getränketechnik, Molkerei, Lebensmittel, Pharmazie oder Chemie verwendet, beispielsweise in Molkereianlagen zur Steuerung und gleichzeitigen Trennung von Milch und Reinigungsflüssigkeit. Ein Doppelsitzventil hat ein Ventilgehäuse, das einen zum Beispiel an eine erste Leitung, beispielsweise eine Produktleitung, anschließbaren ersten Gehäuseraum und einen zum Beispiel an eine zweite Leitung, beispielsweise eine Reinigungsflüssigkeitsleitung, anschließbaren zweiten Gehäuseraum bildet. Zum wahlweisen Verbinden oder abgedichteten Trennen der Gehäuseräume ist ein axial beweglicher, mit einer Ventilsitzfläche zusammenwirkender erster Ventilkörper und ein in Reihe zu diesen angeordneter, relativ zu diesem und axial beweglicher, mit einer Ventilsitzfläche zusammenwirkender zweiter Ventilkörper vorgesehen, wobei die Ventilkörper zwischen sich einen zur Umgebung des Ventils geöffneten Leckagehohlraum begrenzen und wobei jeder Ventilkörper mindestens eine zur zugeordneten Ventilsitzfläche geöffnete Dichtungsnut aufweist, in der ein Dichtungskörper zur Abdichtung des Ventilkörpers gegen die Ventilsitzfläche angeordnet oder anordenbar ist. Die Ventilkörper sind zumindest derart bewegbar, daß sie in einer Schließstellung ein Überströmen von Fluid zwischen den Gehäuseräumen verhindern und in einer Öffnungsstellung unter Abdichtung des Leckagehohlraumes ein Überströmen ermöglichen. Der Leckagehohlraum dient vor allen der leckagesicheren Trennung der Produkte, da bei Dichtungsproblemen Fluid aus einem der Gehäuseräume oder beiden in den Leckagehohlraum gelangt, nicht aber in den anderen Gehäuseraum.

Insbesondere in den genannten Einsatzbereichen spielen Hygiene und Sauberkeit sowie die Möglichkeit einer schnellen gründlichen Reinigung eines Ventils eine große Rolle. Besonders wichtig ist es, daß sich in den Ventilen keine Verunreinigungen festsetzen können und/oder Verunreinigungen leicht entfernt werden können. Zur Reinigung können manche dieser Ventile daher in regelmäßigen Abständen mit einer Reinigungsflüssigkeit durchspült werden, um ggf. abgelagerte Verunreinigungen zu beseitigen. Nicht beseitigte Ablagerung können, insbesondere bei Milchprodukten, Kosmetikprodukten oder dergleichen, die Bildung von Keimherden begünstigen, wodurch in ungünstigen Fällen große Chargen von Produkten kontaminiert und damit unbrauchbar werden können. Weiterhin ist es meist gewünscht, Teile der in der Regel fest in Leitungsnetzwerken eingebauten Ventile leicht auswechseln und/oder reinigen zu können.

Bekannte Doppelsitzventile, wie sie beispielsweise in der DE 38 35 944 oder der EP 0 711 940 gezeigt sind, können manche dieser Forderungen recht gut erfüllen. Es ist jedoch manchmal eine Neigung zur Verschmutzung und zur Bildung von Keimherden beobachtet worden.

Der Erfindung liegt die Aufgabe zugrunde, ein Ventil zu schaffen, das die Nachteile des Standes der Technik vermeidet. Insbesondere soll das Ventil so ausgebildet sein, daß die Neigung zur Ablagerung schwer entfernbarer Verunreinigungen herabgesetzt oder weitgehend unterdrückt wird.

Zur Lösung dieser Aufgabe schlägt die Erfindung ein Ventil mit den Merkmalen von Anspruch 1 vor.

Bei gattungsgemäßen Ventilen wird das technische Problem erfindungsgemäß dadurch gelöst, daß mindestens eine Dichtungsnut durch den zugeordneten Ventilkörper hindurch fluidleitend mit der Umgebung des Ventils verbunden ist. Bei Doppelsitzventilen kann die Verbindung insbesondere in den Leckagehohlraum führen. Vorzugsweise ist eine derartige Verbindung bei allen der Abdichtung gegen den Ventilsitz dienenden Dichtungsnuten vorgesehen. Eine Dichtungsnut weist also zusätzlich zu der dem zugeordneten Ventilsitz zugewandten Nutöffnung, durch die ein eingelegter Dichtungskörper herausragen kann, eine aus dem Inneren der Dichtungsnut zur Umgebung führende Verbindung auf. Diese ermöglicht schon beim Einsetzen eines Dichtungskörpers, daß sich keine Lufteinschlüsse bilden können, die potentielle Räume für Ablagerungen bieten könnten. Denn die durch das Dichtmaterial beim Einbau verdrängte Luft in der Dichtungsnut muß nicht über die normalerweise durch den einzusetzenden Dichtungskörper verkleinerte oder geschlossene ventilsitzzugewandte Nutöffnung entweichen, sondern kann durch die eingesetzte Dichtung direkt durch den Ventilkörper hindurch ins Freie gedrängt werden. Die mindestens eine Fluidleitung durch den Ventilkörper bietet weiterhin die Möglichkeit, den Bereich von Dichtungsnut und eingesetztem Dichtmittel durch geeignete Spülung von hinten, d.h. durch die mindestens eine Fluidleitung in Richtung ventilsitzzugewandter Nutöffnung, zu reinigen. Die rückseitige Öffnung einer Dichtungsnut ermöglicht zudem bei Dichtungsriß eine schnelle Leckanzeige. Während bisher bei Dichtungsriß Leckflüssigkeit entlang des Ventilsitzes an der Dichtung vorbei gelangen mußte, um nachweisbar zu sein, ist nun ein ggf. kürzerer Leckagestromweg quer zur Umfangsrichtung der Dichtung durch die Dichtungsnut hindurch gegeben, was eine deutlich frühere Leckageanzeige fördern kann, so daß ggf. größere Kontaminationen durch rechtzeitigen nach Austausch von Dichtungen verhindert werden können. Die fluidleitende Verbindung zwischen Dichtungsnut und Umgebung durch den Ventilkörper kann vorzugsweise durch mehrere, beispielsweise vier, vorzugsweise regelmäßig um den Umfang der Dichtungsnut verteilte Fluidkanäle bzw. Bohrungen mit radialem Anteil realisiert werden. Diese Fluidkanäle können beispielsweise in einem zur Umgebung offenen hohlen Innenraum eines Ventilkörpers und/oder, bei Doppelsitzventilen, im Leckagehohlraum münden.

Eine weitere Maßnahme zur Verhinderung der Bildung von Ablagerungen ist bei einer Weiterbildung dadurch gegeben, daß mindestens eine der Dichtungsnuten, vorzugsweise alle Dichtungsnuten, einen durchgängig konvex gekrümmten, insbesondere kreisrunden Querschnitt hat. In diese kann eine querschnittsangepaßte, insbesondere im Querschnitt kreisrunde Dichtung, normalerweise geringfügig komprimiert, eingesetzt werden. Eine eckenfreie Innenkontur der Dichtungsnut bietet im Gegensatz zu den bekannten und insbesondere bei Doppelsitzventilen vielfach eingesetzten profilierten, insbesondere schwalbenschwanzförmigen Dichtungsnuten praktisch keine Sammelstellen für Verunreinigungen, da die Hinterwanderung des Dichtungskörpers und eine Ablagerung von Verunreinigungen in nicht durch Dichtungsmaterial ausgefüllten Taschen im Bereich von Innenkanten vermieden wird. Ein im wesentlichen kreisrunder Dichtungskörperquerschnitt ermöglicht auch die kleinstmögliche Elastomeroberfläche, was ebenfalls im Hinblick auf Hygiene und Reinigung vorteilhaft ist.

Eine Weiterbildung eines Doppelsitzventils zeichnet sich dadurch aus, daß die Dichtungen sowohl des ersten Ventilkörpers, als auch des zweiten Ventilkörpers als Radialdichtungen ausgebildet sind. Diese wirken vorzugsweise mit einer im wesentlichen zylindrischen Ventilsitzfläche zusammen, die zwischen den Gehäuseräumen, insbesondere durch das Ventilgehäuse selbst, gebildet ist, aber auch an einem vom Ventilgehäuse gesonderten Einsatz vorgesehen sein kann. Im Gegensatz zu herkömmlichen Lösungen ist bei dieser Ausführungsform zur Abdichtung keine axial wirkende Preßkraft erforderlich. Dadurch muß der Antrieb für die axiale Bewegung der Ventilkörper nur so stark ausgelegt sein, daß durch Fluiddruck in den Gehäuseräumen entstehenden Axialkräften entgegengewirkt werden kann. Der Antrieb braucht keine Axialkraft bzw. Vorspannung für die Dichtfunktion aufzubringen. Derartige Ventile sind, wenn sie, wie bevorzugte Ausführungsformen, pneumatisch betätigt werden, mit deutlich geringeren Luftdrücken bis beispielsweise max. 4 bis 5 bar schaltbar. Herkömmliche Ventile, bei denen die Dichtfunktion über axiale Anpressung eines Ventilkörpers an den zugehörigen Ventilsitz bewirkt wird, benötigen in der Regel zwischen ca. 6 und ca. 8 bar. Ein Antrieb dieser bevorzugten Weiterbildung kann entsprechend kostengünstiger, leichter und kleiner als herkömmliche Antriebe ausgelegt sein.

Während bekannte Doppelsitzventile zum Teil komplizierte Dichtungsanordnungen mit mehreren, ggf. unterschiedlich querschnittsgeformten Dichtungen aufweisen, ist bei einer Weiterbildung vorgesehen, daß der erste Ventilkörper nur eine Dichtung, insbesondere eine Radialdichtung, und/oder der zweite Ventilkörper nur eine Dichtung, insbesondere eine Radialdichtung, aufweist. Dies verringert den Fertigungsaufwand, da nur jeweils eine Dichtungsnut vorgesehen werden muß. Die Anzahl notwendiger Teile sowie die Anzahl potentieller Verunreinigungsstellen kann hierdurch minimiert werden.

Bei erfindungsgemäß ausgebildeten Doppelsitzventilen kann, wie beim Stand der Technik, vorgesehen sein, für die Abdichtung des Leckagehohlraumes zusätzlich zu den genannten Gehäusedichtungen an einem oder beiden Ventilkörpern noch mindestens eine weitere, gesonderte Dichtung vorzusehen, die in einem der Ventilkörper dem anderen Ventilkörper zugewandt angeordnet ist und sich beim Zusammenschieben der Ventilkörper an den anderen Ventilkörper zur Abdichtung des Leckagehohlraumes anpreßt. Bei einer bevorzugten Ausführungsform kann hierauf verzichtet werden. Sie ist dadurch gekennzeichnet, daß einer der Ventilkörper, insbesondere der erste Ventilkörper, eine vorzugsweise innenkonische Dichtfläche bildet, die bei zusammengeschobenen Ventilkörpern mit einer Gehäusedichtung des anderen Ventilkörpers, insbesondere des zweiten Ventilkörpers, zur Abdichtung des Leckagehohlraumes zusammenwirkt. Dadurch kann die mit den gehäusefesten Ventilsitz zusammenwirkende Gehäusedichtung eine Doppelfunktion erfüllen, indem sie einerseits den Ventilkörper zum Gehäuse-Ventilsitz abdichtet und andererseits, bei zusammengeschobenen Ventilkörpern, den Leckagehohlraum gehäuseseitig abdichtet.

Eine bevorzugte Ausführungsform eines Doppelsitzventils ist durch eine Zentrierfunktion bei gemeinsamer Verschiebung der Ventilkörper in der ersten Phase des Schaltvorganges zwischen Öffnungsstellung und Schließstellung gekennzeichnet. Hierzu sind Zentriermittel zur gegenseitigen Zentrierung der Ventilkörper bei gemeinsamer Bewegung vorgesehen. Insbesondere kann einer der Ventilkörper, vorzugsweise der erste Ventilkörper, einen in Richtung auf den anderen Ventilkörper, insbesondere den zweiten Ventilkörper, axial vorstehenden Umfangsvorsprung mit einer, vorzugsweise innenkonischen, Zentrierfläche haben, die mit einer komplementären, insbesondere außenkonischen, Zentrierfläche des anderen Ventilkörpers zusammenwirkt. Beim axialen Aufeinanderpressen der Zentrierflächen halten die Ventilkörper beim weiteren Vorschub aneinander fest und gewährleisten dadurch eine radiale Stabilisierung während des Schaltvorganges. Vorzugsweise ist die genannte Dichtfläche zur Abdichtung des Leckagehohlraumes an dem Umfangsvorsprung ausgebildet und die Dichtungsnut des anderen Ventilkörpers öffnet sich zur komplementären Zentrierfläche. Damit hat auch der im Querschnitt vorzugsweise nasenförmige Umfangsvorsprung eine Doppelfunktion sowohl als Zentriermittel, als auch als Dichtungssitz bei der Abdichtung des Leckagehohlraumes während der Schaltung.

Ein vorzugsweise pneumatischer Antrieb für die Ventilkörper eines Doppelsitzventiles kann derart ausgelegt sein, daß er in einem axialen Haupthub die Ventilkörper von einer Schließstellung in eine Öffnungsstellung bewegt, wobei in der Schließstellung ein Überströmen von Fluid durch Anlage der Dichtungen am Ventilsitz zwischen den Gehäuseräumen verhindert wird und in einer Öffnungsstellung unter Abdichtung des Leckagehohlraumes ein Überströmen ermöglicht wird. Diese Grundfunktion kann bei besonderen Ausführungsformen noch durch weitere Einsteilmöglichkeiten für das Ventil ergänzt werden, wobei vorzugsweise der erste Ventilkörper und/oder der zweite Ventilkörper unabhängig voneinander in eine Reinigungsstellung bewegbar sind, in der die zugeordnete mindestens eine Dichtung außer Eingriff mit der Ventilsitzfläche und der zugeordnete Gehäuseraum fluidleitend mit dem Leckagehohlraum verbunden ist.

Zur Erzeugung der Ventilkörperbewegungen während des Haupthubes kann der Antrieb einen gegen die Kraft mindestens einer Hauptfeder bewegbaren, vorzugsweise pneumatisch betätigbaren, in einem Zylinder geführten Hauptkolben aufweisen, der mit dem antriebsabgewandten Ventilkörper, beispielsweise über eine Ventilbetätigungsstange gekoppelt ist, wobei sich vorzugsweise der antriebszugewandte Ventilkörper elastisch, insbesondere über mindestens eine Nebenfeder, an dem Hauptkolben abstützt. Während die Hauptfeder als Kolbenrückholfeder des Hauptkolbens wirken kann, sorgt die Nebenfeder für ein Aneinanderpressen der Ventilkörper unter Abdichtung des Leckagehohlraumes zu Beginn der Hubbewegung zwischen Schließstellung und Öffnungsstellung.

In Weiterbildung ist vorgesehen, daß die, vorzugsweise innerhalb des Zylinders angeordnete, insbesondere als Druckfeder ausgebildete Hauptfeder federwegbegrenzt ist, vorzugsweise über einen insbesondere einteilig ausgeführten Federkäfig, der sich an der Zylinderwand axial abstützen kann. Diese Ausbildung fördert eine leichte und gefahrlose Demontage des Antriebs. Der den Hauptkolben und die Hauptfeder sowie den Federkäfig umschließende Zylinder, ein den Zylinder auf der ventilabgewandten Seite verschließender Deckel sowie die Hauptfeder und der Federkäfig können eine Einheit bilden, die bei Demontage nicht zerlegt werden muß. Die als Druckfeder ausgebildete Hauptfeder stützt sich an einer axialen Seite am Deckel und an der anderen axialen Seite am Federkäfig ab, über den sie auf den Hauptkolben wirkt. Wenn der Federkäfig seine zum Beispiel durch einen zylinderfesten Anschlag definierte Endposition einnimmt, die einer maximalen Auslenkung der Hauptfeder entspricht, wird der Hauptkolben vom Federdruck entlastet bzw. entkoppelt und kann bei Demontage zur deckelabgewandten Seite des Zylinders herausgenommen werden, ohne daß bei Öffnen des Zylinders Gefahr zum Beispiel durch herausgeschleuderte Antriebsteile besteht. Der Federkäfig selbst sitzt dabei, durch die Feder an den Anschlag gepreßt, wackelfrei und gegen Herausfallen gesichert im Zylinder.

Bei einer Weiterbildung ist vorgesehen, daß mindestens ein Kolben, vorzugsweise der Hauptkolben, beidseitig mit Fluiddruck, insbesondere Druckluft, beaufschlagbar ist. Während die beschriebene Beaufschlagung von der hauptfederabgewandten Seite des Kolbens die Öffnungsbewegung einleitet, kann die Druckeinleitung von der gegenüberliegenden Seite, an der auch die Hauptfeder angreift, eine Bewegung des Hauptkolbens und des damit verbundenen Ventilkörpers in eine der Öffnungsbewegung entgegengesetzte Richtung bewirken. Hierbei kann sich der Kolben aus der Stellung, bei der er sich in Kontakt mit der voll expandierten, vom Federkäfig gehaltenen Feder befindet, unter Lösung vom Federkäfig fortbewegen und den antriebsabgewandten, zweiten Ventilkörper in seine Reinigungsstellung bewegen. Durch die beidseitige Druckbeaufschlagung des Hauptkolbens in Verbindung mit der wegbegrenzten Kolbenrückholfeder ist es also möglich, durch einen einzigen Kolben, den Hauptkolben, zwei verschiedene Einstellungen des Ventils zu realisieren, nämlich den Haupthub einerseits und ein Anlüften des zweiten Ventilkörpers zur Reinigung andererseits. Ein derartiges Ventil kommt mit weniger Teilen aus als herkömmliche Ventile, die für jede Betriebsart einen gesonderten Kolben im Antrieb verwenden.

Eine Weiterbildung, die ein gesondertes Anlüften des ersten Ventilkörpers in seine Reinigungsstellung ermöglicht, zeichnet sich dadurch aus, daß der Antrieb einen gegen die Kraft einer Nebenfeder, vorzugsweise pneumatisch, bewegbaren, in einem Zylinder geführten Nebenkolben aufweist, der mit dem antriebszugewandten Ventilkörper koppelbar ist, wobei vorzugsweise der Nebenkolben in Abheberichtung, vorzugsweise über einen Anschlag, an einer mit diesem Ventilkörper verbundenen, vorzugsweise hohlen Ventilstange angreift, während er in der entgegengesetzten Richtung relativ zu der Ventilstange beweglich ist. Hierdurch wird es möglich, durch zwei Kolben im Antrieb drei separat ansteuerbare Ventilstellungen einzustellen.

Weitere Weiterbildungen, insbesondere solche, die eine Reinigung oder Sterilisierung von beweglichen Teilen der Ventilkörper und/oder Ventilkörperbetätigung außerhalb der Gehäuseräume und damit einen noch hygienischeren Betrieb ermöglichen, werden im Zusammenhang mit den Ausführungsformen näher erläutert.

Weitere Merkmale und Einzelheiten der Erfindung ergeben sich aus der nachfolgenden Beschreibung von bevorzugten Ausführungsformen in Verbindung mit den Zeichnungen und den Unteransprüchen. Hierbei können die einzelnen Merkmale jeweils für sich allein oder zu mehreren in Kombination miteinander bei einer Ausführungsform verwirklicht sein. Ausführungsbeispiele der Erfindung werden in den Zeichnungen dargestellt und im folgenden näher erläutert. In den Zeichnungen zeigen:
- Fig. 1: einen axialen Längsschnitt durch eine Standard-Ausführung eines erfindungsgemäß ausgebildeten Doppelsitzventils in Schließstellung (oben) und Öffnungsstellung (unten),
- Fig. 2: eine vergrößerte Detailansicht des Ventilgehäuses mit den Gehäuseräumen und den Ventilkörpern der Ausführungsform in Fig. 1 in Schließstellung (oben) und Öffnungsstellung (unten),
- Fig. 3: einen Längsschnitt durch den Bereich des Ventilgehäuses während des Anlüftens und Reinigens des ersten Ventilkörpers,
- Fig. 4: ein Längsschnitt durch den Bereich des Ventilgehäuses während des Anlüftens und Reinigens des zweiten Ventilkörpers,
- Fig. 5: eine vergrößerte Detailansicht des Antriebs der Ausführungsform gemäß Fig. 1,
- Fig. 6: eine einfache Ausführunsgform eines Doppelsitzventils mit einem einzigen Pneumatikanschluß und integrierter Spülung, und
- Fig. 7: eine andere Ausführungsform eines Doppelsitzventils ähnlich der nach Fig. 1 mit einer Einrichtung zur Reinigung und/oder Sterilisierung der Ventilkörper außerhalb der Gehäuseräume.

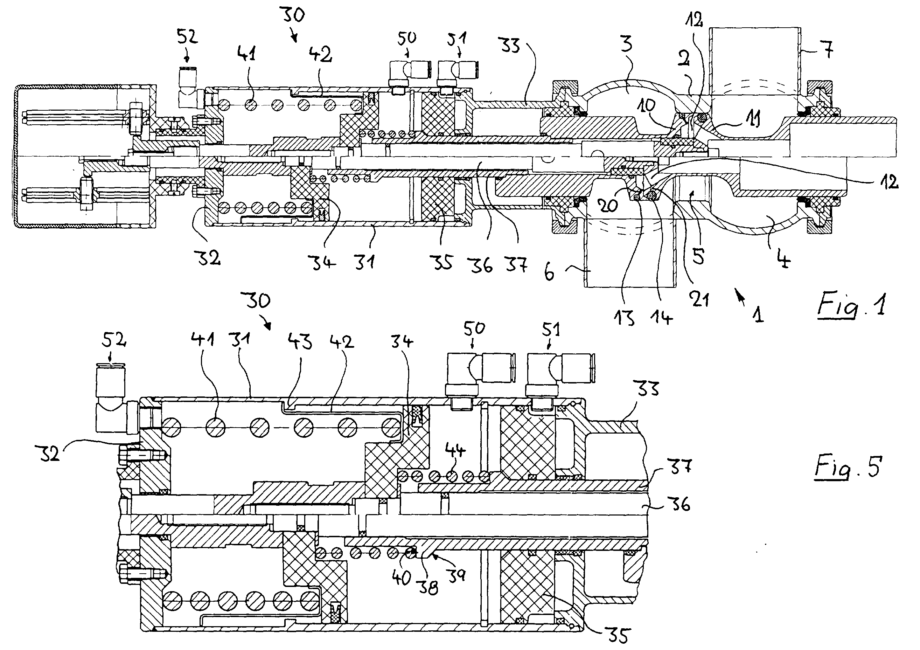

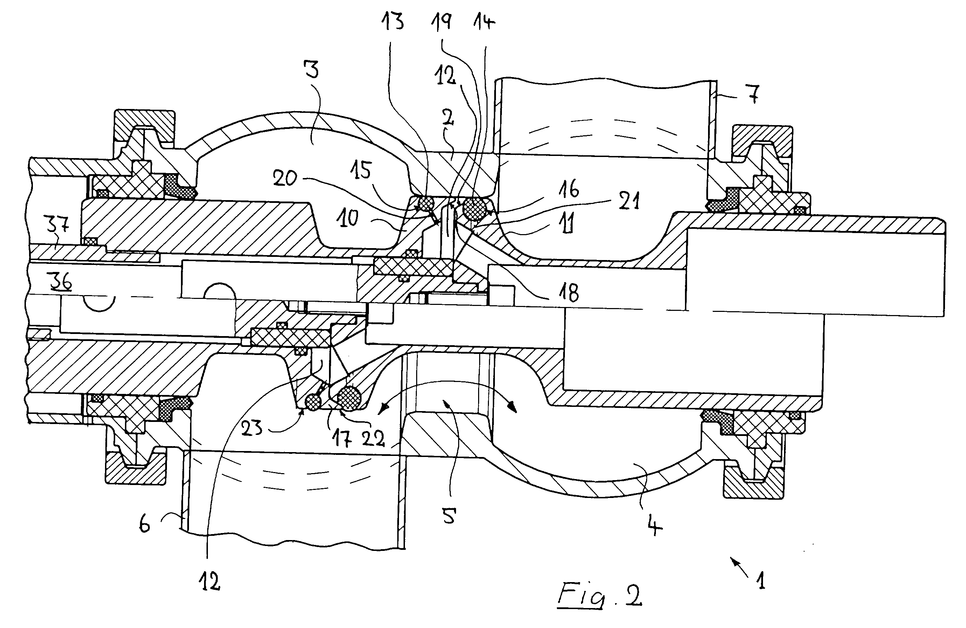

Die Erfindung wird am Beispiel von Doppelsitzventilen erläutert, kann jedoch auch bei Einsitz-Ventilen realisiert werden. Der Längsschnitt in Fig. 1 zeigt eine Standard-Ausführung eines erfindungsgemäßen Doppelsitzventils 1, das bevorzugt senkrecht stehend in Kreuzungsbereichen von Leitungen eines Leitungsnetzwerkes mit übereinanderliegenden Leitungen eingebaut werden kann, beispielsweise in einer automatischen Drucktankanlage einer Molkerei. Das besonders auch in Fig. 2 gut zu erkennende Ventil hat ein Ventilgehäuse 2 mit zwei axial versetzten, abgeflacht kugelförmigen Gehäuseräumen bzw. Ventilkammern 3, 4, zwischen denen eine an der Gehäusewand ausgebildete, zylindrische Ventilsitzfläche 5 koaxial zur Längsachse des Ventils ausgebildet ist. An den ersten, im eingebauten Zustand oberen Gehäuseraum 3 kann über einen zugeordneten Anschlußstutzen 6 eine beispielsweise zu einem Milchtank führende Produktleitung angeschlossen werden, während an den zweiten, unteren Gehäuseraum 4 über einen Anschlußstutzen 7 eine zu einem Reinigungsflüssigkeitstank führende Leitung anschließbar sein kann. Ein Gehäuseraum kann ggf. auch direkt an einem Tank oder einem anderen Behälter angeschlossen sein. In dem Ventilgehäuse sind zwei axial relativ zum Ventilgehäuse und relativ zueinander bewegliche Ventilkörper 10, 11 mit im Bereich der Ventilsitzfläche 5 angeordneten Ventiltellern angeordnet, die zwischen sich einen Leckagehohlraum 12 begrenzen, der durch das hohle Innere des zweiten, unteren Ventilkörpers 11 zur Umgebung hin offen ist und durch den bei Abdichtproblemen im Bereich des Ventilsitzes 5 Leckageflüssigkeit aus dem oberen Gehäuseraum 3 und/oder aus dem unteren Gehäuseraum 4 ins Freie ablaufen kann, ohne daß bei einem Ventil in Schließstellung Flüssigkeit von einem zum anderen Gehäuseraum fließen kann.

Jeder der Ventilkörper hat zur Abdichtung gegen die Ventilsitzfläche 5 im Umfangsbereich des rotationssymmetrischen Ventiltellers einen einzigen, im Querschnitt kreisrunden Dichtring 13 bzw. 14 aus chemisch beständigem Elastomermaterial, der in eine der Querschnittsform des zugeordneten Dichtrings angepaßte Dichtungsnut 15 bzw. 16 unter vollständiger Ausfüllung der Dichtungsnut eingepaßt ist. Die obere, erste Dichtungsnut 15 ist im Querschnitt kleiner als die untere, zweite Dichtungsnut 16 und öffnet sich im Bereich einer zylindrischen Umfangsfläche 23 des Ventilkörpers 10 ausschließlich in radialer Richtung zum Ventilsitz 5. Auf der dem unteren Ventilkörper 11 zugewandten Seite des oberen Ventilkörpers 10 ist ein im Querschnitt nasenförmiger Umfangsvorsprung 17 ausgebildet, der eine dem Leckagehohlraum 12 zugewandte, sich zum unteren Ventilkörper konisch erweiternde Innenkonusfläche 18 aufweist. Der untere Ventilkörper 11 hat im Bereich der Dichtungsnut 16 eine der Schrägung der Innenkonusfläche 18 angepaßte Außenkonusfläche 19, die vom dickeren Dichtungsring 14 überragt wird. Der dickere Dichtungsring 14 bildet im Zusammenwirken mit der Ventilsitzfläche 5 eine Radialdichtung und ist in axialer Richtung von der Seite des oberen Ventilkörpers 10 zugänglich.

Jede der Dichtungsnuten 15 bzw. 16 ist über jeweils vier gleichmäßig um den Umfang des zugeordneten Ventilkörpers verteilte Bohrungen 20 bzw. 21 nach radial innen durch den zugeordneten Ventilkörper hindurch mit dem Leckagehohlraum 12 bzw. den mit diesem kommunizierenden Hohlräumen der Ventilkörpers und der Umgebung des Ventils fluidleitend verbunden. Diese Bohrungen bringen mehrere, insbesondere bei hygienisch sensitiven Einsatzbereichen entscheidende Vorteile. Zum einen kann bei Einpressen des zugeordneten elastischen Dichtungskörpers durch die im Vergleich zum Dichtungsringdurchmesser engere Außenöffnung der Dichtungsnut das Innere der Dichtungsnut durch den Ventilkörper hindurch entlüftet werden, so daß ein Dichtungsring, der normalerweise im eingesetzten Zustand geringfügig komprimiert ist und über die radiale Öffnung der zugeordneten Nut etwas hinaussteht, vollflächig an der Innenfläche der Dichtungsnut anliegen kann, ohne daß es zur Bildung von Hohlräumen oder Taschen aufgrund von "gefangener" Luft kommen kann. Dadurch wird die Entstehung potentieller Sammelstellen für Verunreinigungen schon beim Einbau vermieden. Weiterhin ergibt sich die Möglichkeit, eine Dichtungsnut bzw. Dichtung durch den Leckagehohlraum hindurch von hinten bzw. von innen zu spülen, was eine Reinigung des Kontaktbereiches zwischen Dichtung und Dichtungsnut ohne Entnahme des Dichtringes ermöglicht. Weiterhin kann bei einem spröde gewordenen oder gerissenen Dichtungsring Leckageflüssigkeit auf kurzem Wege durch die Dichtungsnut und die zugeordnete Bohrung in den Leckageraum gelangen, so daß Dichtungsprobleme frühzeitig bemerkt werden können. Bisher war für Leckageflüssigkeit ein Umweg über die abgedichtete Fläche, also den Spalt zwischen Dichtring und Ventilsitz 5, erforderlich.

Die Ablagerung von Verunreinigungen wird zusätzlich durch die eckenfreie, insbesondere kreisrunde Querschnittsform von Dichtungsnut und zugeordnetem Dichtungsring unterstützt. Während es bei herkömmlichen schwalbenschwanzförmigen und/oder anderen teilweise ebenflächig begrenzten Dichtungsnuten zur Bildung von nicht mit Dichtungsmaterial gefüllten Taschen und damit zur Gefahr der Hinterwanderung durch Verunreinigungen kommen kann, wird diese Gefahr durch das vollflächige Anliegen der im Querschnitt runden Dichtungsringe über den gesamten Innenumfang der zugeordneten, im Querschnitt runden Dichtungsnut zuverlässig vermieden.

Die Ventilkörper können durch einen später näher erläuterten Antrieb in einem axialen Haupthub von einer in den Figuren 1 und 2 jeweils oben gezeigten Schließstellung in eine in den Figuren jeweils unten gezeigte Öffnungsstellung gemeinsam axial bewegt werden. In der Schließstellung wird ein Überströmen von Flüssigkeit zwischen den Gehäuseräumen 3, 4 dadurch vermieden, daß die Dichtringe 13 bzw. 14 an die zylindrische Ventilsitzdichtfläche 5 dichtend angepreßt werden. Sollte eine der Dichtungen undicht werden, so würde in dieser Schließstellung die jeweilige Flüssigkeit nicht in den anderen Gehäuseraum gelangen, sondern an der zugeordneten Dichtung vorbei, und ggf. durch die zugeordnete Bohrung 20 bzw. 21 über den Leckageraum 12 nach außen gelangen. Abdichtungsprobleme können daher über entsprechende Sensoren frühzeitig erkannt und das entsprechende Ventil ausgetauscht oder repariert werden.

Bei der Bewegung in die jeweils unten gezeigte Öffnungsstellung, die ein Überströmen von Flüssigkeit (Pfeil in Fig. 2) zwischen den Gehäuseräumen ermöglicht, wird der zweite, untere bzw. antriebsabgewandte Ventilkörper 11 zum oberen Ventilkörper 10 hingezogen. In der ersten Phase des Öfffnungsvorganges legt sich der nasenförmige Umfangsvorsprung 17 mit seiner Innenkonusfläche 18 einerseits unter Druck an die Außenkonusfläche 19 des unteren Ventilkörpers an und sorgt somit für eine gegenseitige Zentrierung der Ventilkörper bei gemeinsamer Bewegung. Zum anderen drückt sich, wie in Fig. 2 unten gut zu erkennen, die axiale, schräge Spitze des Umfangsvorsprunges von radial außen und axial an den über die Außenkonusfläche 19 hinausstehenden, freien Abschnitt des dicken Dichtungsringes 14 an, wodurch die ohnehin wegen der axialen Preßpassung kaum flüssigkeitsdurchlässige Verbindungszone zwischen den festen, insbesondere metallischen Teilen der Ventilkörper im Bereich der konischen Zentrierflächen 18, 19 von radial außen, also eingangsseitig, gegen eindringende Flüssigkeit abgedichtet wird. Der Dichtring 14 erfüllt somit eine Doppelfunktion, indem er zum einen eine Radialdichtung zwischen unterem Ventilkörper 11 und Ventilsitz 5 und zum anderen eine kombinierte Radial/Axial-Dichtung für den Leckagehohlraum bei gemeinsamer Bewegung der Ventilkörper bildet. Dadurch entfällt die Notwendigkeit, für die Abdichtung des Leckagehohlraumes eine gesonderte Dichtung vorzusehen. Auch die Innenkonusflächen 18 des Vorsprunges 17 erfüllt eine Doppelfunktion, indem sie einerseits als mechanische Zentrierfläche und andererseits als Ventilsitzfläche für die Abdichtung des Leckagehohlraumes wirkt und mit ihrer Spitze die Dichtung 14 nach radial innen und axial zusammenpreßt, wenn die Ventilkörper aneinander anliegen.

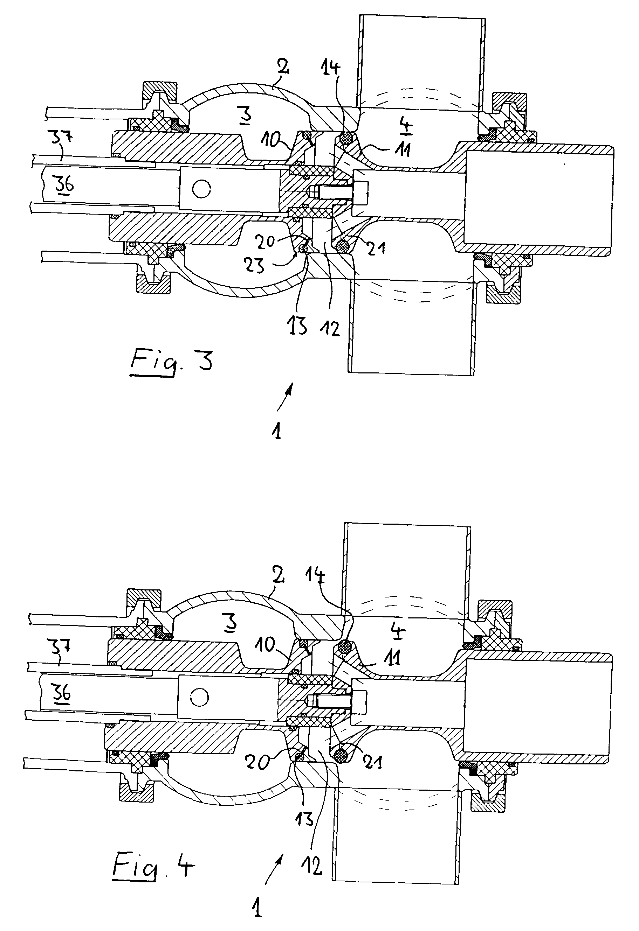

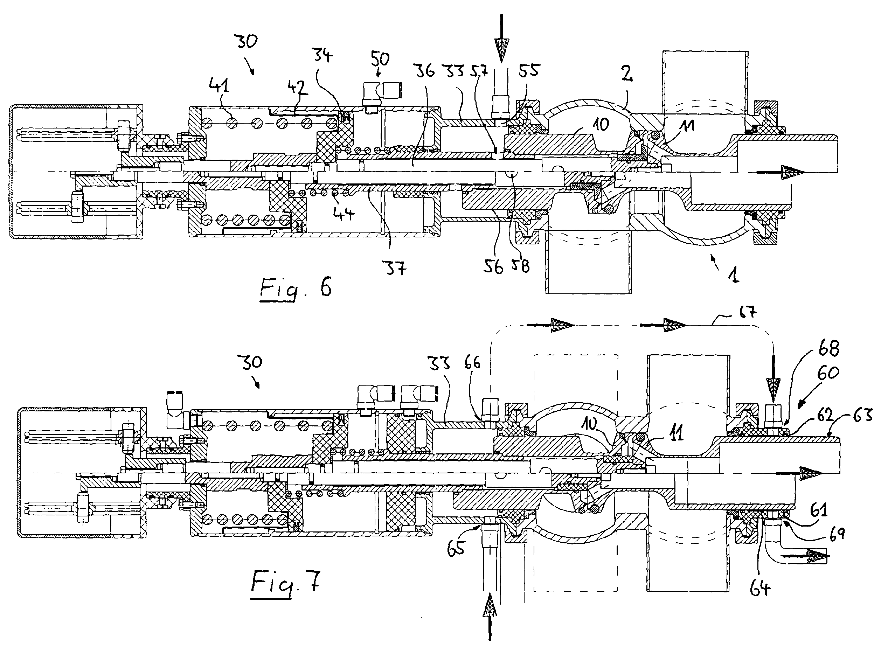

Bei bevorzugten Ausführungsformen sind der erste Ventilkörper und der zweite Ventilkörper unabhängig voneinander in eine Reinigungsstellung bewegbar, in der die zugeordnete Dichtung 13 bzw. 14 außer Eingriff mit der Ventilsitzfläche 5 und der zugeordnete Gehäuseraum 3 bzw. 4 flüssigkeitsleitend mit dem Leckagehohlraum 12 verbunden ist. Anhand Fig. 3 wird hierzu das Anlüften des oberen Ventilkörpers 10 erläutert, bei dem dieser vom festgehaltenen unteren Ventilkörper 11 weg unter Vergrößerung des Leckagehohlraumes 12 so weit axial herausbewegt wird, daß der Dichtring 13 außer Eingriff mit der Ventilsitzfläche 5 und in das Innere des Gehäuseraumes 3 gezogen wird. Die zylindrische Umfangsfläche 23 des Ventiltellers bleibt dabei in Anlage mit der Ventilsitzfläche 5, was radiales Spiel weitgehend vermeidet, jedoch ein Durchdringen von unter einem Überdruck stehender Reinigungsflüssigkeit aus dem Gehäuseraum 3 in den zur Umgebung offenen Leckagehohlraum 12 ermöglicht. Eine gleichermaßen wirksame Spülmöglichkeit für das untere Ventil wird anhand von Fig. 4 erläutert. Hierzu bleibt der obere Ventilkörper in seiner bei der Schließstellung gegebenen Position mit dichtendem Eingriff des Dichtrings 13 an der Ventilsitzfläche 5. Der untere Ventilkörper 11 wird axial so weit vorn oberen Ventilkörper wegbewegt, daß unter Vergrößerung des Leckagehohlraumes 12 der Dichtring 14 von der Ventilsitzfläche 5 abgezogen wird und nun durch Reinigungsflüssigkeit, die durch den Gehäuseraum 4 unter Druck herangeführt werden kann, spülbar ist. In beiden Fällen dichtet der jeweils nicht gespülte Ventilkörper seine zugeordnete Leitung so ab, daß durch diese auch während des Spülvorganges Produktflüssigkeit geleitet werden kann.

Bei den gezeigten Ausführungsformen ist ein weiterer vorteilhafter Aspekt dadurch gegeben, daß alle Dichtungen zwischen zylindrischem Ventilsitz 5 und den ringförmigen Gehäusedichtungen 13 bzw. 14 der Ventilkörper als Radialdichtungen ausgebildet sind. Hierdurch sind für die Betätigung der Ventile, insbesondere auch für eine sichere Abdichtung in der Schließstellung, keine axialen Andruckkräfte durch einen Antrieb aufzubringen, so daß ein Antrieb keine Dichtfunktion unterstützen, sondern lediglich gegen durch Leitungsdruck bewirkte Axialkräfte auf den Ventilkörper wirken muß. Derartige Ventile sind mit geringem Kraftaufwand, und insbesondere bei pneumatischer Betätigung mit geringeren Luftdrücken, als mit Axialdichtungen arbeitende Ventile schaltbar.

Ventile der beschriebenen Art können durch jeden geeigneten Ventilantrieb gesteuert werden, der mindestens die Auf-/Zu-Stellung des Ventils steuern, aber ggf. auch die beschriebene Einzelverstellung der beiden Ventilkörper 10 und 11 ermöglichen kann. Eine bevorzugte Ausführung eines pneumatisch betätigbaren Antriebs 30 wird insbesondere anhand von Fig. 5 erläutert. Der Antrieb hat ein Kreiszylinderrohr 31, das auf der ventilabgewandten Seite durch einen eine zentrische Bohrung aufweisenden angeschweißten Deckel 32 abgeschlossen ist.

Auf der gegenüberliegenden Seite ist ein einen abgedichteten Abschluß mit zentrischer Bohrung bildender Teil eines in Form einer Laterne ausgebildeten Zwischenstückes 33 angebracht, das zwischen Antriebszylinder 31 und Ventilgehäuse 2 herausnehmbar eingebaut ist. Bei der gezeigten Ausführungsform ist in dem Zylinder ein gegen die Zylinderinnenwand abgedichteter Hauptkolben 34 und auf dessen ventilzugewandter Seite ein mit diesem koaxialer Nebenkolben 35 axial verschiebbar angeordnet. Der Hauptkolben 34 ist über eine zylindrische Ventilstange 36 starr mit dem unteren Ventilkörper 11 gekoppelt. Der Nebenkolben 35 dient der separaten Steuerung des oberen Ventilkörpers 10. Dieser ist an einer die Ventilstange 36 konzentrisch umschließenden, hohlen Ventilstange 37 befestigt, die innerhalb des Antriebszylinders einen radial vorstehenden Bund 38 hat, der auf seiner dem Nebenkolben 35 zugewandten Seite eine konische Schrägfläche 39 und auf der axial gegenüberliegenden Seite eine radiale Anschlagfläche 40 bildet. Der Nebenkolben 35 hat eine zur Schrägfläche 39 korrespondierende, zentrierend wirkende Innenkonusfläche, die bei Bewegung des Nebenkolbens vom Ventilgehäuse weg die hohle Ventilstange 37 unter Anlage an den Vorsprung 38 mitnimmt, während in entgegengesetzter Richtung der Kolben auf der Ventilstange 37 abgedichtet verschiebbar ist.

Zwischen Deckel 32 und Hauptkolben 34 ist koaxial mit dem Kolben eine als Spiraldruckfeder ausgebildete Hauptfeder 41 angeordnet, die sich einerseits am Deckel 32 und andererseits an einem Federkäfig 42 abstützt. Der einteilig ausgeführte Federkäfig hintergreift in der in Fig. 5 oben gezeigten maximalen Auslenkstellung der Feder 41 mit einem nach radial außen vorstehenden Vorsprung einen Innenbund 43 des Zylinders 31 und bewirkt somit eine Federwegbegrenzung der Hauptfeder 41. Der Federkäfig wird in den Zylinder 31 eingesetzt, bevor der Deckel 32 angeschweißt wird und ist durch den Innenbund 43 gegen Herausfallen aus dem Zylinder gesichert. Die Hauptfeder 41 wirkt über den Federkäfig 42 auf den Hauptkolben 34, der in der in Fig. 5 oben gezeigten Stellung bei Anschlag des Federkäfigs 42 von der Kraft der Hauptfeder entkoppelt wird, während in der darunter gezeigten Rückzugstellung die Kraft der Feder 41 über den Federkäfig auf den Hauptkolben wirkt. Bei vom Federkäfig abgehobenem Hauptkolben wird der Federkäfig durch die Feder an den Innenbund gepreßt und spielfrei festgehalten. Auf der gegenüberliegenden Seite des Hauptkolbens stützt sich eine die Hohlstange 37 umschließende Nebenfeder 44 ab, deren anderes Ende an der radialen Anschlagsfläche 40 angreift und über diese auf die Kolbenstange 37 wirkt.

Bei der gezeigten Ausführungsform hat der Antrieb 30 drei in das Innere des Zylinders 31 führende Pneumatikanschlüsse 50 bis 52. Der Haupthub zwischen Schließ- und Öffnungsstellung wird durch Druckgaseinleitung über den zwischen Haupt- und Nebenkolben angeordneten Hauptanschluß 50 bewirkt, wodurch der Hauptkolben 34 gegen die Kraft der Hauptfeder 41 verschoben wird und den unteren Ventilkörper zum Antrieb hinzieht. Der Ventilkörper 11 bewegt sich unter Schließung des Leckagehohlraumes auf den oberen Ventilkörper 10 zu und nimmt diesen Richtung Antrieb mit, wodurch der Bund 38 von dem als Axialanschlag wirkenden Nebenkolben 35 abgehoben wird. Die Nebenfeder 44 bewirkt eine axiale Anpreßkraft der Ventilkörper in der Schließstellung und sorgt für einen den Leckagehohlraum dichtenden Sitz der Ventilkörper aneinander. Die axiale Anpreßkraft der Ventilkörper in Schließstellung ist damit durch die Auslegung der Federkraft der Nebenfeder bestimmt und entsprechend einstellbar. Bei Druckentlastung bewegt die Rückholfeder 41 den Hauptkolben und die beiden Kolbenstangen 36, 37 gemeinsam zu dem Gehäuse 2 hin, bis der Anschlag 38 am Nebenkolben anschlägt und eine weitere Axialbewegung des oberen Ventilkörpers 10 verhindert. Dann bewegt sich der untere Ventilkörper vom oberen Ventilkörper weg bis in die Schließstellung mit geöffneten Leckagehohlraum. Dabei wird die im Vergleich zur Hauptfeder schwächere Nebenfeder axial komprimiert.

Zum Anlüften des unteren Ventilkörpers (Fig. 4) wird durch den auf der Hauptfederseite des Hauptkolbens, insbesondere im Deckel 32 angeordneten Pneumatikanschluß 52 Druckgas eingelassen, das den Hauptkolben 34 bei anschlagbegrenzt maximal expandierter Feder 41 vom Federkäfig 42 abhebt und in Richtung Ventilgehäuse unter Zusammenpressung der Nebenfeder 44 nach unten verschiebt, um die in Fig. 4 gezeigte Reinigungsstellung zu erreichen. Bei Druckentlastung kehrt der Hauptkolben unter Einwirkung der Nebenfeder 44 in die in Fig. 5 oben gezeigte Schließstellung zurück.

Zur separaten Betätigung des oberen Ventilkörpers 10 (Fig. 3) wird der ventilzugewandte Pneumatikanschluß 51 verwendet, durch den Druckgas auf die dem Hauptkolben und den Federn abgewandte Seite des Nebenkolbens 35 einleitbar ist. Eingeleitetes Druckgas treibt den Nebenkolben 35 unter Mitnahme der Ventilstange 37 in Richtung des unbewegten Hauptkolbens, wodurch der obere Ventilkörper angelüftet wird. Bei Druckentlastung kehrt der Nebenkolben unter der Kraft der Nebenfeder 44 in seine untere Anschlagstellung zurück.

Es wird deutlich, daß insbesondere durch die Möglichkeit der beidseitigen Druckbeaufschlagung des Hauptkolbens 34 für drei unabhängig voneinander durchführbare Antriebsbewegungen (Haupthub, Anlüften des oberen und Anlüften des unteren Ventilkörpers) nur zwei Kolben benötigt werden, was unter Vermeidung überflüssiger Teile einen robusten, kostengünstigen Aufbau eines Ventilantriebes ermöglicht.

Die Demontage des Antriebes ist im übrigen mit einfachsten Mitteln und für einen Bediener völlig gefahrlos möglich. Eine zentrale Baueinheit des Antriebes besteht aus dem Zylinderrohr 31, dem Deckel 32, der Hauptfeder 41 sowie dem Federkäfig 42 und stellt eine eigene Einheit dar, die normalerweise nicht zerlegt wird. Alle anderen Teile im Antrieb, insbesondere der Hauptkolben mit zugehöriger Kolbenstange 36, die Nebenfeder und der Nebenkolben mit zugehöriger Kolbenstange 37 können problemlos und ohne Federbelastung durch die Hauptfeder nach unten herausgenommen werden. Damit wird jede Dichtung im Druckluftbereich zur Kontrolle oder Auswechslung leicht zugänglich.

Bei den folgenden Ausführungen werden Bauteile gleichen oder ähnlichen Aufbaus wie in Fig. 1 bis 5 aus Gründen der Übersichtlichkeit mit gleichen Bezugszeichen gekennzeichnet. Die Ausführungsform nach Fig. 6 zeigt einen vereinfachten Antrieb mit nur einem Haupt-Pneumatikanschluß 50 und ohne Nebenkolben. Sie kann entsprechend nur den beschriebenen Haupthub, nicht jedoch die separaten Reinigungshübe ausführen. Als Besonderheit ist die auch bei anderen Ausführungsformen bei geeigneter Modifikation durchführbare Möglichkeit der gesonderten Reinigung von beweglichen Teilen der Ventilbetätigung vorgesehen. Ein Zwischenbereich zwischen Antrieb 30 und Ventilgehäuse 2 ist durch die Laterne 33 verschmutzungsdicht, insbesondere aber auch feuchtigkeitsdicht hermetisch abgeschlossen, so daß kein Schmutz eindringen kann. Durch eine radiale Anschlußöffnung 55 der Laterne 33 kann Reinigungsflüssigkeit in das Innere des Zwischenstücks 33 geleitet werden, wodurch in diesem Abschnitt die Außenseite der Ventilstange 37 und, bei Ventilen in Öffnungsstellung, ein zylindrischer Abschnitt 56 des oberen Ventilkörpers gereinigt werden kann, der sich bei den axialen Hubbewegungen zwischen dem Inneren des Ventilgehäuses 2 und der Ventilgehäuseumgebung hin- und herbewegt. Dadurch kann Schmutzeintrag in diesem Bereich verhindert werden. Die hohle Ventilstange 37 weist eine während der gesamten Hubbewegung innerhalb der Laterne befindliche Gruppe von radialen Durchgangsbohrungen 57 auf, durch die Reinigungsflüssigkeit in das Innere der Hohlstange 37 geleitet werden kann, um deren Innenseite sowie die antriebsseitig gegen die Innenseite abgedichtete innere Ventilstange 36 außen zu umspülen. Die innere Ventilstange 36 ist zumindest im ventilkörperzugewandten Abschnitt ebenfalls hohl und es führen Durchgangsbohrungen 58 in das hohle Innere, das im Bereich des unteren Ventilkörpers 11 ins Freie mündet. Reinigungsflüssigkeit kann somit im Zwischenbereich 33 eingeleitet und durch die kommunizierenden Höhlräume hindurch unter Reinigung der die Hohlräume begrenzenden Flächen wieder ins Freie abgeleitet werden.

Die Ausführungsform nach Fig. 7 ist antriebsseitig wie diejenige nach Fig. 1 und 5 aufgebaut und ermöglicht somit sowohl einen Haupthub, als auch das separate Anlüften und Reinigen der Ventilkörper. Zusätzlich zu den laternenartigen Zwischenstück 33 ist bei dieser Ausführungsform ein antriebsabgewandter Endbereich 60 flüssigkeitsdicht abgeschlossen. Dies wird durch ein das untere Ende des Ventilgehäuses überragendes zylindrisches Endstück 61 erreicht, in dessen äußeren Bereich eine Radialdichtung 62 gegen eine zylindrische Außenfläche 63 am unteren Ventilkörper abdichtet und damit einen flachen, ringspaltförmigen Zwischenraum 64 zwischen Endstück 61 und Ventilkörper 11 schafft. Das Zwischenstück hat eine Einlaßöffnung 65 und eine radial gegenüberliegende Auslaßöffnung 66, die über eine außerhalb des Ventilgehäuses verlaufende, durch die Pfeile angedeutete Bypass-Leitung 67 zu einer Einlaßöffnung 68 in den Ringspalt 64 führt, aus dem Reinigungsflüssigkeit durch eine radial gegenüberliegende Auslaßöffnung 69 ablaufen kann. Die in Zusammenhang mit Fig. 6 erläuterte Möglichkeit der Innenspülung der Ventilstangen ist ebenfalls gegeben. Die Ausführungsform ermöglicht eine ggf. permanente Spülung und ggf. Sterilisierung sämtlicher bei den Ventilkörperbewegungen in das Innere der Gehäuseräume 3, 4 gelangenden Oberflächen, wodurch ein möglicher Eintrag von Verunreinigungen zuverlässig vermieden wird.

Es ist dem Fachmann verständlich, daß die im Zusammenhang mit den Dichtungen erläuterten Vorteile erfindungsgemäßer Ventile mit jeder Art von geeignetem Antrieb erzielbar sind, während umgekehrt die beschriebenen, vorteilhaften Antriebe bei jedem Doppelsitzventil nutzbar sind, das für die beschriebenen Stellbewegungen ausgelegt ist. Des weiteren können die Reinigungsmöglichkeiten unabhängig von den Dichtungen und dem Antrieb auch bei anderen Doppelsitzventilen gegeben sein. Insbesondere ist die Auslegung im Dichtungsbereich mit Fluidkanälen, die das Innere von Dichtungsnuten mit der Umgebung eines Ventils verbinden, auch bei Ventilen mit nur einem Ventilkörper oder mehr als zwei Ventilkörpern vorteilhaft einsetzbar. Die Erfindung ermöglicht also insbesondere auch ein Ventil, insbesondere zur Steuerung von fließfähigen Produkten im Chemie- und Nahrungsmittelbereich, mit einem Ventilgehäuse und mindestens einem mit einer Ventilsitzfläche zusammenwirkenden, vorzugsweise axial beweglichen Ventilkörper, der mindestens eine zu der Ventilsitzfläche geöffnete Dichtungsnut aufweist, in der eine Dichtung bzw. ein Dichtungskörper zur Abdichtung des Ventilkörpers gegen die Ventilsitzfläche angeordnet oder anordenbar ist, wobei mindestens eine Dichtungsnut durch den Ventilkörper hindurch fluidleitend mit der Umgebung des Ventils verbunden ist. Der Ventilkörper kann beispielsweise einen zur Umgebung offenen hohlen Innenraum haben, in den Verbindungskanäle zur Dichtungsnut münden.

## Patentansprüche

1. Ventil, insbesondere zur Steuerung von fließfähigen Produkten im Chemie- und Nahrungsmittelbereich, mit einem Ventilgehäuse (2) und mindestens einem mit einer Ventilsitzfläche (5) zusammenwirkenden, beweglichen Ventilkörper (10, 11), der mindestens eine zu der Ventilsitzfläche (5) geöffnete Dichtungsnut (15, 16) aufweist, in der ein Dichtungskörper (13, 14) zur Abdichtung des Ventilkörpers gegen die Ventilsitzfläche angeordnet oder anordenbar ist, dadurch gekennzeichnet, daß mindestens eine Dichtungsnut (15, 16) durch den Ventilkörper (10, 11) hindurch fluidleitend mit der Umgebung des Ventils verbunden ist.

2. Ventil nach Anspruch 1, dadurch gekennzeichnet, daß ein Ventilkörper (10, 11) mehrere, vorzugsweise regelmäßig um den Umfang der Dichtungsnut verteilte, von der Dichtungsnut (15, 16) durch den Ventilkörper zur Umgebung führende Fluidkanäle aufweist.

3. Ventil nach Anspruch 1 oder 2, dadurch gekennzeichnet, daß mindestens eine Dichtungsnut (15, 16), vorzugsweise alle Dichtungsnuten, einen durchgängig konvex gekrümmten, insbesondere im wesentlichen kreisrunden, Querschnitt hat.

4. Ventil nach einem der vorhergehenden Ansprüche, dadurch gekennzeichnet, daß alle Dichtungskörper (13, 14) einen dem Querschnitt der zugeordneten Dichtungsnut (15, 16) angepaßten, durchgängig konvex gekrümmten, insbesondere im wesentlichen kreisrunden, Querschnitt haben.

5. Ventil nach einem der vorhergehenden Ansprüche, dadurch gekennzeichnet, daß es ein Doppelsitzventil zur Steuerung von getrennt zu haltenden, fließfähigen Produkten ist, wobei
das Ventilgehäuse (2) einen ersten Gehäuseraum (3) und einen zweiten Gehäuseraum (4) bildet;
ein axial beweglicher erster Ventilkörper (10) und ein in Reihe zu diesem angeordneter, relativ zu diesem und axial beweglicher zweiter Ventilkörper (11) vorgesehen ist und
die Ventilkörper (10, 11) zwischen sich einen zur Umgebung des Ventils geöffneten Leckagehohlraum (12) begrenzen;
wobei jeder Ventilkörper mindestens eine zu einer dem zwischen den Gehäuseräumen angeordneten Ventilsitzfläche (5) geöffnete Dichtungsnut (15, 16) aufweist, in der ein Dichtungskörper (13, 14) zur Abdichtung des Ventilkörpers gegen die Ventilsitzfläche (5) angeordnet oder anordenbar ist, und wobei
mindestens eine Dichtungsnut (15, 16) durch den zugeordneten Ventilkörper (10, 11) hindurch fluidleitend mit der Umgebung des Doppelsitzventils, insbesondere dem Leckagehohlraum (12), verbunden ist.

6. Ventil nach Anspruch 5, dadurch gekennzeichnet, daß die Dichtungen des ersten Ventilkörpers (16) und des zweiten Ventilkörpers (11) als Radialdichtungen ausgebildet sind, die vorzugsweise mit einer zylindrischen Ventilsitzfläche (5) des Ventilgehäuses (5) zusammenwirken.

7. Ventil nach einem der Ansprüche 5 oder 6, dadurch gekennzeichnet, daß der erste Ventilkörper (10) nur einen Dichtungskörper (13) und/oder der zweite Ventilkörper (11) nur einen Dichtungskörper (14) aufweist.

8. Ventil nach einem der Ansprüche 5 bis 7, dadurch gekennzeichnet, daß einer der Ventilkörper (10) eine vorzugsweise innenkonische Dichtfläche (18) bildet, die mit einem Gehäusedichtungskörper (14) des anderen Ventilkörpers (11) zur Abdichtung des Leckagehohlraumes (12) zusammenwirkt.

9. Ventil nach einem der Ansprüche 5 bis 8, dadurch gekennzeichnet, daß Zentriermittel (17, 18, 19) zur gegenseitigen Zentrierung der Ventilkörper (10, 11) bei gemeinsamer Bewegung vorgesehen sind und/oder daß einer der Ventilkörper (10) einen in Richtung des anderen Ventilkörpers (11) axial vorstehenden Umfangsvorsprung (17) mit einer, vorzugsweise innenkonischen, Zentrierfläche (18) hat, die mit einer komplementären, insbesondere außenkonischen Zentriertläche (19) des anderen Ventilkörpers (11) zusammenwirkt.

10. Ventil nach einem der Ansprüche 8 oder 9, dadurch gekennzeichnet, daß die Dichtfläche (18) zur Abdichtung des Leckagehohlraumes (12) an dem Umfangsvorsprung (17) ausgebildet ist, wobei die Dichtfläche vorzugsweise durch die Zentrierfläche (18) des Umfangsvorsprunges (17) gebildet ist.

11. Ventil nach einem der Ansprüche 5 bis 10, dadurch gekennzeichnet, daß ein Antrieb (30) für die Ventilkörper (10, 11) vorgesehen ist, der derart ausgelegt ist, daß in einem axialen Haupthub die Ventilkörper von einer Schließstellung in eine Öffnungsstellung bewegbar sind, wobei in der Schließstellung ein Überströmen von Fluid zwischen den Gehäuseräumen (3, 4) verhindert und in einer Öffnungsstellung unter Abdichtung des Leckagehohlraumes (12) ein Überströmen ermöglicht wird, wobei vorzugsweise der Antrieb (30) derart ausgelegt ist, daß der erste Ventilkörper (10) und/oder der zweite Ventilkörper (11) unabhängig in eine Reinigungsstellung bewegbar sind, in der die zugeordneten Dichtungskörper (13, 14) außer Eingriff mit der Ventilsitzfläche (5) und der zugeordnete Gehäuseraum (3, 4) fluidleitend mit dem Leckagehohlraum (12) verbunden ist.

12. Ventil nach Ansprüuch 11, dadurch gekennzeichnet, daß der Antrieb (30) einen gegen die Kraft mindestens einer Hauptfeder (41) bewegbaren, vorzugsweise pneumatisch betätigbaren, in einem Zylinder (31) geführten Hauptkolben (34) aufweist, der mit dem antriebsabgewandten Ventilkörper (11) gekoppelt ist, wobei sich vorzugsweise der antriebszugewandte Ventilkörper (10) elastisch, insbesondere über eine Nebenfeder (44), an dem Hauptkolben (34) abstützt, wobei vorzugsweise die Hauptfeder (41) federwegbegrenzt ist, vorzugsweise über einen einteiligen Federkäfig (42), der an der Zylinderwand axial abstützbar ist.

13. Ventil nach einem der Ansprüche 11 oder 12, dadurch gekennzeichnet, daß der Antrieb (30) mindestens einen Kolben (34) aufweist, der zur Kolbenbewegung beidseitig mit Fluiddruck beaufschlagbar ist, wobei vorzugsweise der Hauptkolben (34) beidseitig mit Fluiddruck beaufschlagbar ist.

14. Ventil nach einem der Ansprüche 11 bis 13, dadurch gekennzeichnet, daß der Antrieb (30) einen gegen die Kraft mindestens einer Feder, insbesondere einer Nebenfeder (44) bewegbaren, vorzugsweise pneumatisch betätigbaren, in dem Zylinder (31) geführten Nebenkolben (35) aufweist, der mit dem antriebszugewandten Ventilkörper (10) koppelbar ist, vorzugsweise derart, daß der Nebenkolben (35) in einer Axialrichtung den Ventilkörper (10) mitnimmt und in entgegengesetzter Axialrichtung relativ zum Ventilkörper (10) beweglich ist.

15. Ventil nach einem der Ansprüche 11 bis 14, dadurch gekennzeichnet, daß der Antrieb (30) eine Baueinheit umfaßt, die einen auf der ventilabgewandten Seite mit einem Deckel (32) verschlossenen Zylinder (31) umfaßt, in dem gegen Herausfallen gesichert ein eine Hauptfeder (41) umschließender, vorzugsweise einteiliger Federkäfig (42) angeordnet ist, wobei sich vorzugsweise die Hauptfeder (41) axial an dem Deckel (32) und an dem Federkäfig (42) vorgespannt abstützt.

16. Ventil nach einem der vorhergehenden Ansprüche, dadurch gekennzeichnet, daß ein bewegliche Teile der Ventilkörperbetätigung und/oder eines Ventilkörpers umschließender Zwischenbereich zwischen Antrieb (30) und Ventilgehäuse (2) verschmutzungsdicht, insbesondere flüssigkeitsdicht, abgeschlossen ist, wobei insbesondere ein zwischen Antrieb (30) und Ventilgehäuse (2) angeordnetes, vorzugsweise auswechselbares, rohrförmiges Zwischenstück (33) vorgesehen ist und/oder daß ein in einen Gehäuseraum bewegliche Teile eines Ventilkörpers (11) umschließender Endbereich (60) der antriebsabgewandten Seite des Ventilgehäuses (2) flüssigkeitsdicht abgeschlossen, insbesondere gegen den Ventilkörper (11) abgedichtet ist, wobei vorzugsweise der Zwischenbereich (33) und/oder der Endbereich (60) mindestens eine Einlaßöffnung (55, 68) zum Anschluß einer Flüssigkeitsleitung, insbesondere für Reinigungsflüssigkeit, sowie mindestens eine Auslaßöffnung (57, 58, 66, 69) für die Flüssigkeit, aufweist und/oder wobei der Zwischenbereich (33) mit dem Endbereich außerhalb des Ventilgehäuses (2) flüssigkeitsleitend verbunden ist, vorzugsweise durch mindestens eine Bypass-Leitung (67), die insbesondere eine Auslaßöffnung (66) des Zwischenbereiches (33) mit einer Einlaßöffnung (68) des Endbereiches (60) verbindet.
